(19) Europäisches Patentamt
European Patent Office
Office européen des brevets

(11) **EP 4 174 858 A1**

(12) **EUROPEAN PATENT APPLICATION**

(43) Date of publication:
**03.05.2023 Bulletin 2023/18**

(21) Application number: **22198031.1**

(22) Date of filing: **27.09.2022**

(51) International Patent Classification (IPC):
*G11B 27/10* (2006.01)    *H04N 21/43* (2011.01)
*H04N 21/436* (2011.01)    *H04N 21/439* (2011.01)
*H04N 21/6373* (2011.01)

(52) Cooperative Patent Classification (CPC):
**H04N 21/4305; G11B 27/10; H04N 21/43615;
H04N 21/4392; H04N 21/6373**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2021 US 202117452675**

(71) Applicant: **Plantronics, Inc.
Santa Cruz, California 95060 (US)**

(72) Inventors:
• **LIU, Yibo
Santa Cruz, 95060 (US)**
• **CHU, Peter L
Santa Cruz, 95060 (US)**

(74) Representative: **Haseltine Lake Kempner LLP
One Portwall Square
Portwall Lane
Bristol BS1 6BH (GB)**

(54) **SOFTWARE-BASED AUDIO CLOCK DRIFT DETECTION AND CORRECTION METHOD**

(57)    A software rational resampler (312) is located in an audio buffer path to correct clock differences between a sender and a receiver. Counters track the frames into an audio buffer (308) from the sender and the frames removed from an audio buffer (316) by the receiver. A change in the difference between the sender frame counter (310) and the receiver frame counter (314) is detected and used as a triggering event to initiate changing (239) the parameters of the software rational resampler (312). The software rational resampler parameters may be saved so that if audio is received from the same source, the software rational resampler (312) is configured on system startup.

Fig. 5

EP 4 174 858 A1

**Description**

**FIELD OF THE INVENTION**

This disclosure relates generally to transferring digital audio between two devices.

**BACKGROUND**

Unless there is a synchronization mechanism between two audio devices, their audio clocks will drift apart, causing receive audio buffers to grow or shrink depending on whether the receiver's clock is slower/faster than sender's clock. Differing audio clocks also degrade an acoustic echo canceller's (AEC) double talk performance.

For example, if a USB device is attached to a PC, or a USB device is attached to a videoconferencing endpoint, clock drift will happen, even though both devices maybe crystal locked. In another example, when a videoconferencing endpoint calls another videoconferencing endpoint an over IP network, clock drift will also develop between the two videoconferencing endpoints.

When one device acting as a sender uses its clock to send audio to the receiver, which receives audio frames at its own clock rate, typically the receiver's buffer will grow or shrink due to sender and receiver clock rate differences.

A first solution to the clock drift problem was to simply ignore the clock drift and let the audio buffer grow or shrink. For the growing case, where the receiver clock was slower than the sender clock, once the buffer reaches its maximum level, the buffer was simply reset. This strategy resulted in increased audio delay while the buffer was growing, audio glitching while flushing the buffer, and leading the acoustic echo canceller to diverge. For the case of shrinking buffers, silence was inserted as needed.

A second solution was to monitor the audio buffer level and drop frames or insert silence as needed, with the added concern of fading out/in to avoid audio clicking and audio quality. The AEC still suffered due to the dropping/addition of the frames.

Both solutions provide adequate audio much of the time but providing better audio all of the time even though there is clock drift would be preferable.

**BRIEF DESCRIPTION OF THE FIGURES**

The accompanying drawings, which are incorporated in and constitute a part of this specification, illustrate an implementation of apparatus and methods consistent with the present invention and, together with the detailed description, serve to explain advantages and principles consistent with the invention.

Figure 1 is a block diagram of a videoconferencing endpoint according to the present invention.

Figure 2 is a block diagram of a processing unit of Figure 1 according to the present invention.

Figure 3 is an illustration of the software architecture of the videoconferencing endpoint of Figure 1.

Figure 4 is an illustration of an audio buffer according to the present invention.

Figure 5 is block diagram of audio clock drift detection and correction according to the present invention.

Figure 6A is a graph illustrating audio clock differences between sender and receiver over time according to the present invention

Figure 6B is a timing diagram illustrating audio clock differences between sender and receiver over time according to the present invention.

Figure 7 is a flowchart of sender audio frame counting according to the present invention.

Figure 8A is a flowchart of receiver audio frame counting and clock drift correction according to a first example of the present invention.

Figure 8B is a flowchart of receiver audio frame counting and clock drift correction according to a second example of the present invention.

**DETAILED DESCRIPTION**

In examples according to the present invention, a software rational or fractional resampler is located in an audio buffer path. Counters track the frames into an audio buffer from the sender and the frames removed from the audio buffer by the receiver. The audio frames from the sender are provided by an operating system audio driver which is performing a protocol conversion from the external device protocol, such as USB or Ethernet and IP. The receiver operates on the audio frames to perform the desired audio function, such as local microphone input processing for a videoconference, which typically includes AEC to remove doubletalk.

Because of the clock drift between the two devices, a difference between the sender frame counter and the receiver frame counter would increase or decrease, based on the difference in the clocks. Because the clocks of the sender and the receiver are close, the period before the difference increases may be a longer period, but eventually the difference will change. This change in the difference between the sender frame counter and the receiver frame counter is detected and used as a triggering event to initiate changing the parameters of the software rational resampler. Eventually the period between the change in the difference between the sender frame counter and the receiver frame counter is a sufficiently long period that the parts per million (PPM) of the clock drift is below a value considered to be low enough that any clock drift problems, such as AEC problems and audio buffer reset-based audio artifacts, occur so infrequently that the problems may not occur during a videoconference session. Additionally, the software rational resampler parameters maybe saved so that if audio is received from the same source, the software rational resampler is configured on system startup as the clock drift is largely repeatable between two given devices.

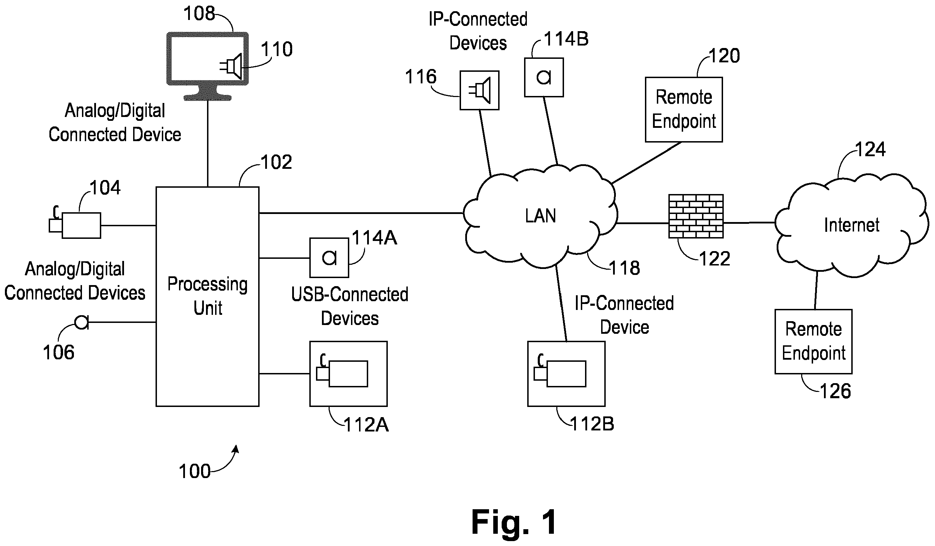

FIG. 1 illustrates an exemplary videoconferencing endpoint 100 according to the present invention. A processing unit 102, often referred to as a codec, performs the necessary processing. Local analog and digital connected cameras 104 and microphones 106 are connected directly to the processing unit 102 in a manner similar to the prior art. A television or monitor 108, including a loudspeaker 110, is also connected to the processing unit 102 to provide local video and audio output. Additional monitors can be used if desired to provide greater flexibility in displaying conference participants and conference content.

In addition to the local analog and digital connected cameras 104 and microphones 106, the videoconferencing endpoint 100 of FIG. 1 includes the capability of operating with camera 112A and microphone 114A that are connected using a USB connection and camera 112B, microphone 114B and speaker 116 that are connected using an Internet Protocol (IP) Ethernet connection, rather than the prior art analog and digital connections. The USB-connected devices are locally connected. The Ethernet/IP-connected devices can be locally connected or can be connected to a corporate or other local area network (LAN) 118. A remote videoconferencing endpoint 120 can be located on the LAN 118. The LAN 118 is connected to a firewall 122 and then the Internet 124 in a common configuration to allow communication with a remote videoconferencing endpoint 126. Both the LAN-connected remote videoconferencing endpoint 120 and the Internet-connected remote videoconferencing endpoint 126 are considered far end videoconferencing endpoints.

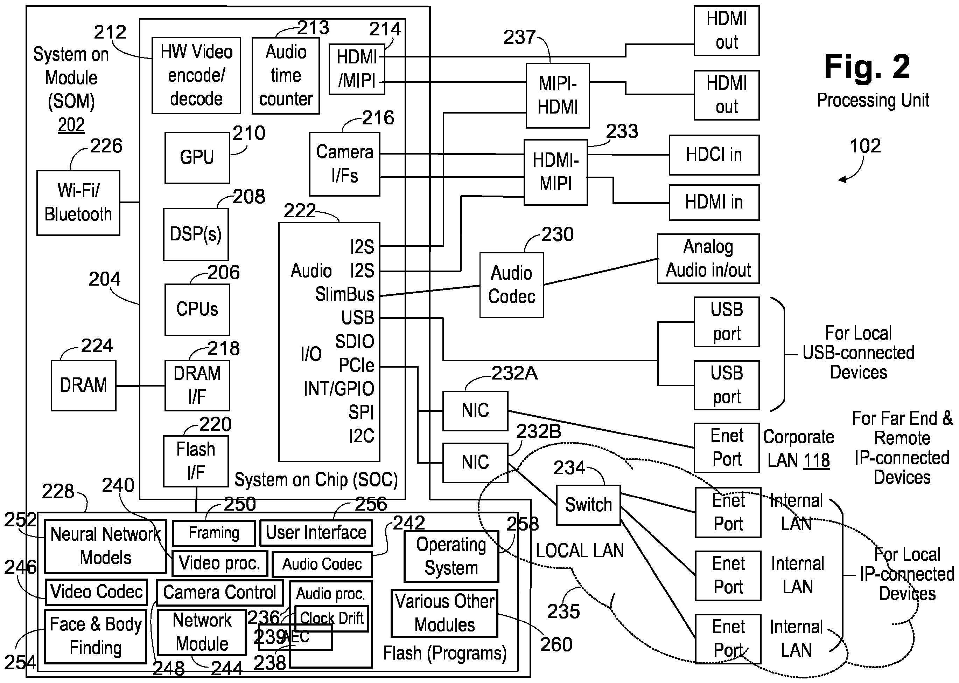

Details of the processing unit 102 of FIG. 1 are shown in FIG. 2. In the illustrated example a system on module (SOM) 202 is the primary component of the processing unit 102. Exemplary SOMs are the nVidia® Jetson TX2 and the Intrinsyc™ Open-Q™ 845 Micro System on Module. The SOM 202 is often developed using a system on a chip (SOC) 204, such as an SOC used for cellular telephones and handheld equipment, such as a Tegra® X2 from Nvidia® in the Jetson TX2 or Qualcomm® 845 in the Open-Q 845. The SOC 204 contains CPUs 206, DSP(s) 208, a GPU 210, a hardware video encode and decode module 212, an HDMI (High-Definition Multimedia Interface) output module 214, a camera inputs module 216, a DRAM (dynamic random access memory) interface 218, a flash memory interface 220 and an I/O module 222. The CPUs 206, the DSP(s) 208 and the GPU 210 are generically referred to as the processor in this description for ease of reference. A local audio time counter 213 is provided to maintain an internal audio time and is driven by an internal clock. The HDMI output module 214 is connected to a MIPI (Mobile Industry Processor Interface) to HDMI converter 237 to provide one HDMI output, with the SOC 204 directly providing one HDMI output. An HDMI to MIPI converter module 233 is connected to receive HDMI and HDCI (High Definition Camera Interface) cameras signals and provide the outputs to the camera inputs module 216. The I/O module 222 provides audio inputs and outputs, such as I2S (Inter-IC Sound) signals; USB (Universal Serial Bus) interfaces; an SDIO (Secure Digital Input Output) interface; PCIe (Peripheral Component Interconnect express) interfaces; an SPI (serial peripheral interface) interface; an I2C (Inter-Integrated Circuit) interface and various general purpose I/O pins (GPIO). DRAM 224 and a Wi-Fi®/Bluetooth® module 226 are provided on the SOM 202 and connected to the SOC 204 to provide the needed bulk operating memory (RAM associated with each CPU and DSP is not shown, as is RAM generally present on the SOC itself) and additional I/O capabilities commonly used today.

Non-volatile flash memory 228 is connected to the SOC 204 to hold the programs that are executed by the processor, the CPUs, DSPs and GPU, to provide the videoconferencing endpoint functionality. The flash memory 228 contains software modules such as an audio processing module 236, which itself includes an acoustic echo canceller (AEC) module 238 and a clock drift correction module 239 described in more detail below; an audio codec driver 242; a video processing module 240; a video codec driver module 246; a camera control module 248; a framing module 250; neural network models 252; body and face finding module 254; user interface module 256 and a network module 244. The audio processing module 236 contains programs for other audio functions, such as various audio codecs, beamforming, and the like. The video processing module 240 contains programs for other video functions, such as any video codecs not contained in the hardware video encode and decode module 212. The network module 244 contains programs to allow communication over the various networks, such as the LAN 118, a Wi-Fi network or a Bluetooth network or link. An operating system 258, such as Linux, and other software modules 260 are also in the flash memory 228.

An audio codec 230 is connected to the SOM 202 to provide local analog line level capabilities. In one example, the audio codec is the Qualcomm® WCD9335. In at least one example of this disclosure, two Ethernet controllers or network interface chips (NICs) 232A, 232B are connected to the PCIe interface. In the example illustrated in FIG. 2, one NIC 232A is for connection to the corporate LAN, while an Ethernet switch 234 is connected to the other NIC 232B to allow for local connection of Ethernet/IP-connected devices over a local LAN 235 formed by the switch 234.

It is understood that the use of an SOM and an SOC is one example and other configurations can readily be developed, such as placing equivalent components on a single printed circuit board or using different Ethernet controllers, SOCs, DSPs, CPUs, audio codecs and the like. It is further understood that a conventional personal computer (PC) can be used instead of the SOM and SOC for videoconferencing endpoint operations based on single users, rather than dedicated videoconferencing endpoints used with groups. The PC example generally utilizes USB-connected cameras and microphones, such as those in a laptop computer or located externally, so that the clock drift problems are present in the PC example as well. It is also understood that other devices, such as tablets and cellular phones can be used as well, with either internal or external microphones.

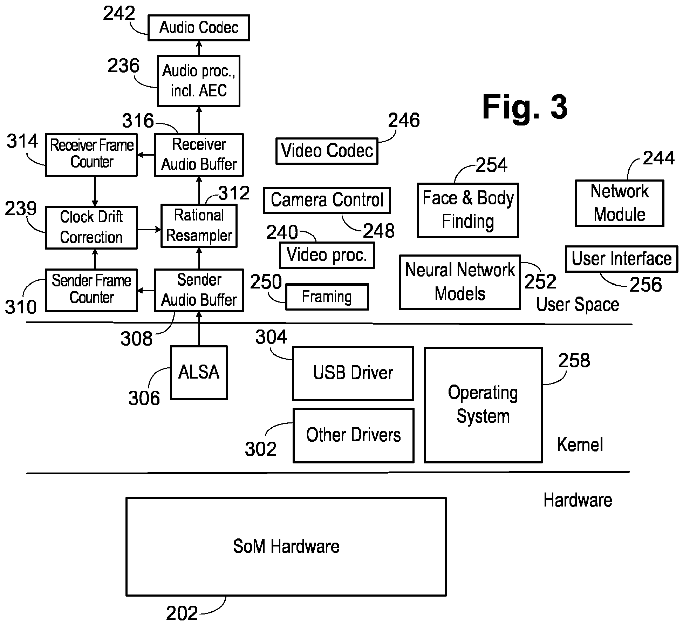

Referring now to Figure 3, the software architecture of the videoconferencing endpoint 100 is illustrated. The SOM hardware 202 forms the lowest layer, the hardware layer. A kernel layer includes the operating system 258, a USB driver 304, other drivers 302 and an advanced Linux sound architecture (ALSA) module 306. The ALSA module 306 is the interface for the audio software of the videoconferencing endpoint 100 to receive and transmit audio frames.

Above the kernel layer is user space, where the modules that provide the videoconferencing functionality execute. Of interest in this description are the audio codec driver 242, the audio processing module 236, a software rational resampler 312, sender audio buffer 308, sender frame counter (SFC) 310, receiver audio buffer 316, receiver frame counter (RFC) 314, and the clock drift correction module 239. The SFC 310 and RFC 314 are close to the ALSA module 306 to minimize the amount of delay and jitter. The clock drift correction module 239 monitors the SFC 310 and the RFC 314 to determine the difference between the SFC 310 and RFC 314. In the case of clock drift, the difference between the SFC 310 and the RFC 314 are changing based on the clock differences between the sender, such as a USB microphone, and the receiver, such as the videoconferencing endpoint 100. Based on these changes in the differences between the SFC 310 and the RFC 314, the clock drift correction module 239 programs the software rational resampler 312 to provide an adjusted series of frames at the receiver clock rate. The software rational resampler 312 changes the frequency of the audio frames between the sender and the receiver to absorb the audio frames from the sender audio buffer 308 at the sender clock rate and to provide audio frames to the receiver audio buffer 316 at the receiver clock rate.

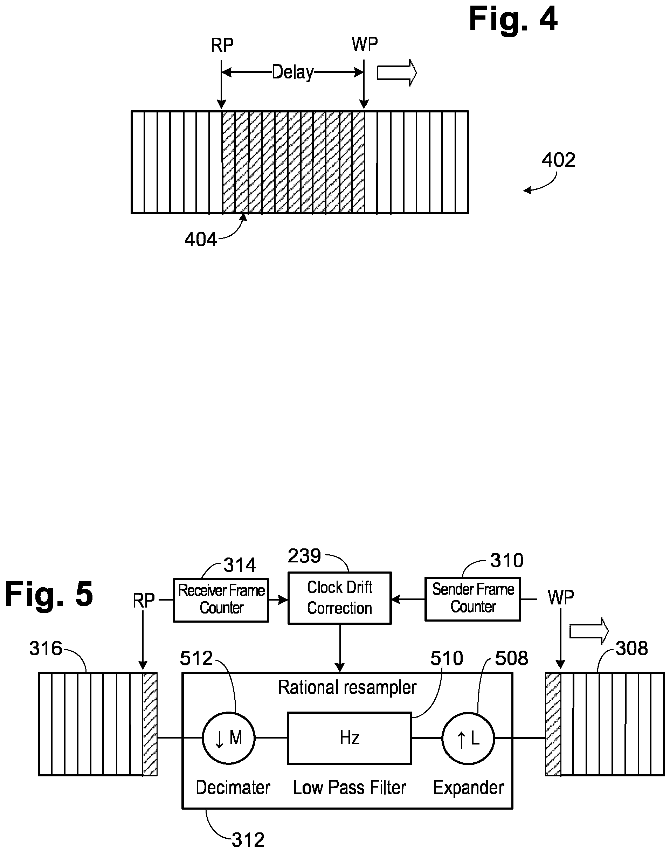

Referring now to Figure 4, an example audio buffer 402 is illustrated. The audio buffer 402 contains audio frames 404 that have been received from the sender, in one example from the ALSA module 306, that are awaiting delivery to the receiver. The number of audio frames 404 are the delay time of the incoming audio frames. A write pointer WP indicates the next buffer entry to receive audio frames from the sender, while a read pointer RP indicates the next buffer entry of an audio frame to be retrieved by the receiver to perform the desired audio function. If the clock rate of the sender and receiver are identical the difference between WP and RP is constant. If the clocks are different between the sender and receiver, so there is clock drift, the audio buffer 402 will either overflow or underflow over time based on the clock drift.

Referring now to Figure 5, operation of one example according to the present invention is illustrated. The audio buffer 402 of Figure 4 has been separated into separate sender audio buffer 308 and receiver audio buffer 316. The sender audio buffer 308 contains frames that are provided from the sender, via the ALSA module 306 in one example, and are being provided at the sender rate. The receiver audio buffer 316 contains audio frames that are to be retrieved by the receiver, such as the audio processing module 236 in one example and are retrieved at the receiver clock rate. The SFC 310 increments on each change of the WP, while the RFC 314 increments on each change of the RP. A software rational resampler 312 is located between the sender and receiver audio buffers 308, 316 to perform the desired clock rate adjustment between the sender and receiver. The software rational resampler 312 includes an expander 508, which expands or upsamples the audio frames by a factor of L. A low-pass filter 510 filters the output of the expander 508. After filtering by the low-pass filter 510, a decimater 512 downsamples the audio frames by a factor of M. Therefore, the effective sampling frequency change is L divided by M, the upsample value divided by the downsample value. By properly setting the L and M values, the audio frames are retrieved from the sender, via the ALSA module 306, at the sender clock rate and frames are provided to the receiver, such as the audio processing module 236, at the receiver clock rate. The clock drift correction module 239 monitors the SFC 310 and RFC 314 values and properly configures the software rational resampler 312 to appropriate values of L and M to perform the desired resampling.

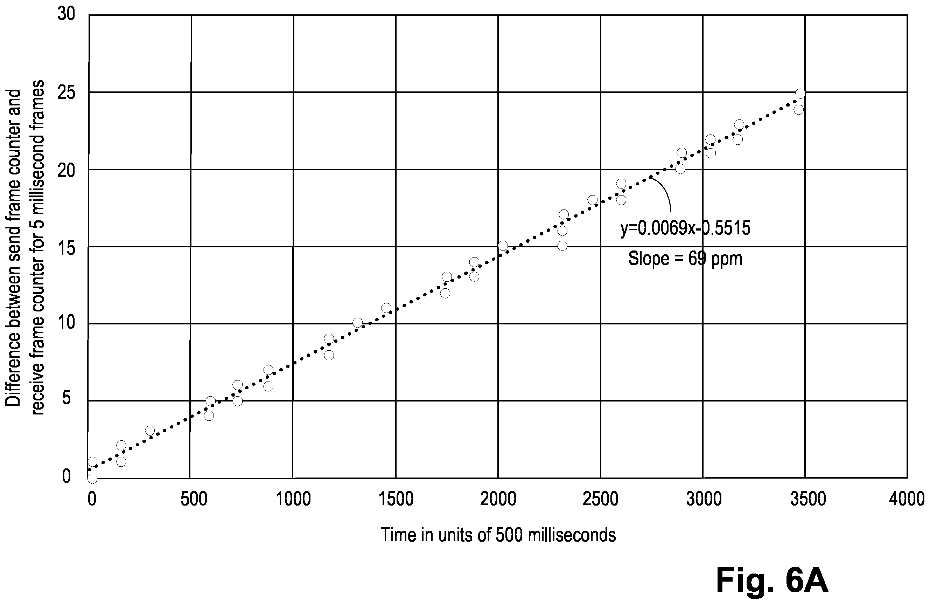

Figure 6A is a graph illustrating the change in the difference between the SFC 310 and the RFC 314 over time. In the illustrated example, the difference between the SFC 310 and the RFC 314 is determined every 500 ms. The circles represent exemplary difference values, generally those where the difference changes. The dashed line is the linear regression of the difference values. The slope of the dashed line is the clock difference, in the illustrated example, 69 parts per million (PPM).

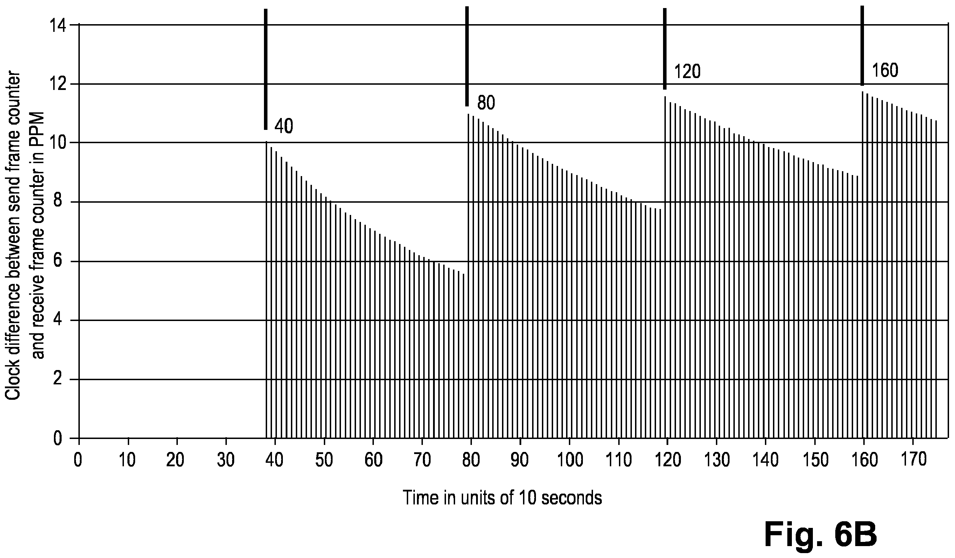

Figure 6B is a timing diagram illustrating the change in the difference between the SFC 310 and the RFC 314 in PPM. As noted, the SFC 310 is incremented for each frame retrieved, for example retrieved from the ALSA module 306, while the RFC 314 is incremented for each frame provided to the audio processing circuitry. In one example the difference is determined every 10 seconds and stored. In the example illustrated in Figure 6B, the PPM of the difference is generally a slowly decreasing value as the actual difference is not changing. However, periodically there is a large step increase in the difference because the difference has changed by one frame. In the illustration of Figure 6B, those step increases occur at 80 10 second units or 800 seconds, 120 10 second units or 1200 seconds and 160 10 seconds units or 1600 seconds. After the step increase, the difference in PPM again continues to slowly decrease.

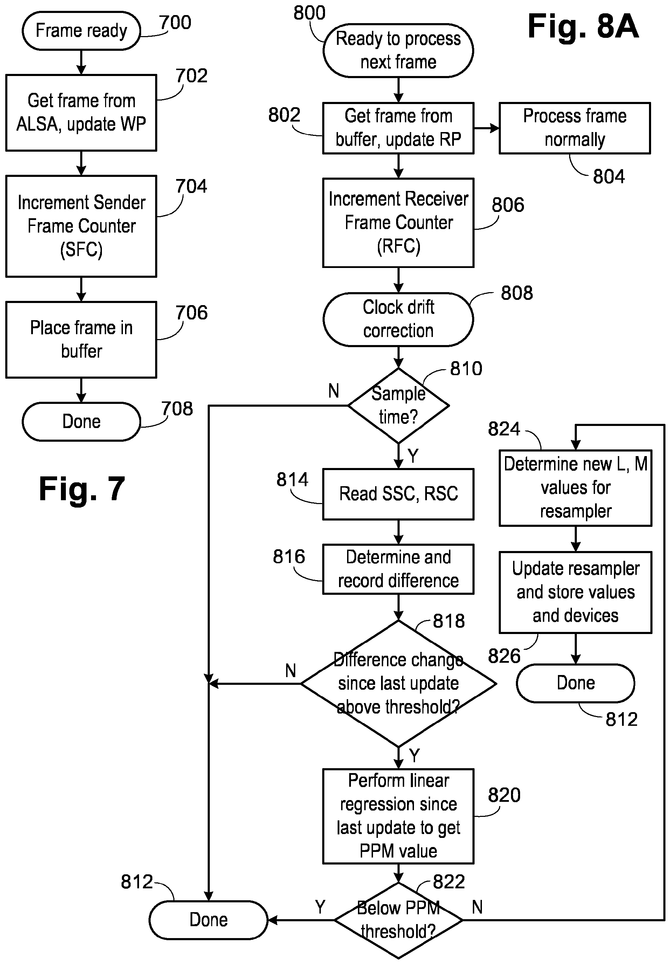

Figure 7 is a flowchart of the operation of the SFC 310. In step 700, a frame is indicated as ready by the ALSA module 306. In step 702, the frame is retrieved from the ALSA module 306, and the WP value is changed. In step 704, the SFC 310 is incremented. In step 706, the frame is placed in the frame buffer, such as sender audio buffer 308.

Figure 8A is a flowchart of the RFC 314 and clock drift correction for a first example. In step 800, the receiver is indicated as ready to process the next frame. In step 802, the frame is retrieved from the buffer, such as receiver audio buffer 316, and the RP value is changed. In step 804, the frame is processed normally for the desired operation, such as a videoconferencing use in the illustrative examples. Based on the change in the RP value in step 802, the RFC 314 is incremented in step 806.

After the RFC 314 is incremented in step 806, clock drift correction 808 begins. In step 810, it is determined if it is time to sample the difference between the SFC 310 and the RFC 314. In one example, this is based on an elapsed time period, such as 10 seconds, while in other examples the time is based on the provision of a particular number of frames to the SFC or the retrieval of a particular number of frames from the RFC. In one example, the frames are retrieved every 5 ms, so that 2000 frames are equivalent to the 10 second period. If it is not sample time, operation proceeds to step 812, where this thread is completed. If it is sample time, in step 814 the SFC 310 and RFC 314 are read to determine the counter values. In step 816, which acts as difference determination logic, the difference between the SFC 310 and the RFC 314 is determined, and the difference value and time stamp are stored. In some examples, the difference value *(diff)* has a low pass filter applied, such as:

$$diff\_low\_pass = diff\_last * (1.0 - alpha\_low) + diff * alpha\_low$$

$$alpha\_low = 0.25$$

Using the low pass filter stabilizes the clock drift calculations. In step 818, which acts as clock drift detection logic, it is determined if the difference change from the last update exceeds a threshold, such as 3 or 5. Upon detecting the difference change exceeding the threshold, it is appropriate to redetermine the clock drift values. If the difference change has not exceeded the threshold in step 818, operation proceeds to step 812. If the difference change has exceeded the threshold in step 818, in step 820 a linear regression is performed using the stored difference values since the last update. As discussed regarding Figure 6A, the slope of the line developed by the linear regression is the PPM of the clock difference. In Figure 6A, the slope is 0.0069 or 69 PPM.

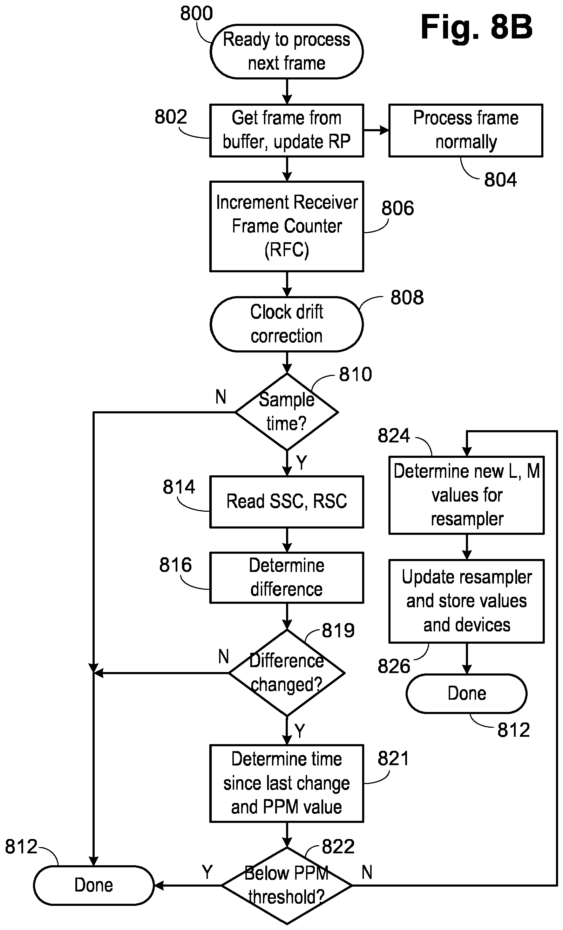

A second example is illustrated in Fig. 8B, which is similar to Fig. 8A except that steps 818 and 820 are changed to steps 819 and 821. In step 819, which also acts as clock drift detection logic, it is determined if the difference has changed from the last sample period, such as the 10 seconds of Fig. 6B. If the difference value has been low pass filtered as discussed above, in some examples, the low pass filtered difference value is then high pass filtered, such as:

$$high\_pass = alpha\_hi * (high\_pass\_last + (diff\_low\_pass - diff\_low\_pass\_last))$$

$$r = \text{int}(high\_pass * scale\_factor + 0.5)$$

$$alpha\_hi = 0.005$$

$$scale\_factor = 1000000.0$$

The high pass filter provides a spike when the difference changes. Using the high pass filter makes the difference change easier to detect.

Referring to Figure 6B, there is a no change in the difference for most of the sample periods, which results in a decreasing PPM for the clock drift, and then there is the larger step change that is due to the difference between the SFC 310 and the RFC 314 changing by one frame. If the difference has changed in step 819, in step 821 the time since the last difference change is determined and the PPM value is determined. For example, in the illustration of Figure 6B, that would be the 400 second difference between 80 and 120. In some examples the equation used is:

$$clock\_drift\_ratio = 5.0 / (time\_to\_last\_difference\_change * 500.0)$$

$$ppm = clock\_drift\_ratio * 1000000.0$$

In some examples, a median value is calculated for a series of difference changes. That median value is then low pass filtered:

$$PPM\_med\_low\_pass = last\_PPM\_med * (1.0 - alpha\_med) + PPM\_med * alpha\_med$$

$$alpha\_med = 0.25$$

This *PPM_med_low_pass* value is then the filtered PPM difference in the clock rates.

In step 822, after either step 820 or step 821, it is determined if the PPM difference is below a given threshold. While it is desirable to exactly match the clock rates of the sender and the receiver, as the software rational resampler is only using integer L and M values, it may not always be possible to obtain exact frequency match. However, if the clock drift is such that the PPM value is sufficiently small, then the AEC is not particularly influenced, and operation can continue without further clock drift changes. In step 822, if the PPM difference is below the threshold, then operation proceeds to step 812. If the PPM difference is above the threshold, in step 824 new L and M values are determined for the software rational resampler 312. In step 826, the software rational resampler 312 is updated with the new L and M values and operation completes at step 812. Steps 824 and 826 act as clock drift correction logic. By correctly changing the L and M values of the software rational resampler 312, the clock drift correction module 239 can extend the amount of time between clock drift calculation operations to a time longer than the average videoconference so that AEC errors and audio disturbances are minimized during the videoconference.

In step 826, the values of L and M for the particular audio providing device and the receiver are recorded in conjunction with the identities of the audio source and receiver. In that manner, the next time the audio frames are received from that audio source, the L and M values are immediately provided to the software rational resampler 312 to avoid the learning process and the audio artifacts present during such process.

While the above description has generally utilized USB-connected microphones and other audio devices as examples, it is understood that Ethernet and IP connected microphones and other audio devices have the same problems relating to clock drift due to clock differences, the differences between the devices largely relating to the use of a different driver, such as a network driver instead of a USB driver, with the Ethernet and IP connected devices further having network jitter concerns as well as clock rate differences. The jitter can be handled by utilizing sufficiently sized buffers, but the clock difference problems remain and can be addressed as described above. It is also understood that other digital audio formats, such as I2S and the like, will also have clock differences between the devices and those can also be addressed as described above.

The above description has utilized Linux as the exemplary operating system. It is understood that operation is similar with other operating systems such as Windows®, macOS®, Android® and iOS™. Each has similar kernel and user space divisions and drivers that interface with audio devices and provide audio outputs for user space programs.

The above description has utilized a software rational resampler executing in user space. The user space example is used as it is generally the easiest to develop and interface with other audio processing programs as kernel drivers and hardware are generally less accessible. It is understood that the audio buffers, counters and software rational resampler used to change the frame rates can be developed in a driver and execute in kernel space if desired.

The above description used 5 ms as an example frame size, but it is understood that other frame sizes, such as 2.5 ms, 10 ms, and 20 ms can be used.

While the above description has discussed the RFC and the SFC being separate from the RP and WP, it is understood that the RP and WP pointers can utilized as the RFC and the SFC when provisions are made to handle the circular nature of the RP and WP and the receiver and sender audio buffers. For example, if the RP or WP has reached the end of the circular buffer forming the receiver audio buffer or sender audio buffer and is reinitialized to point to the beginning of the circular buffer, the length of the respective audio buffer needs to be added to the other of the WP or RP until that pointer also is reinitialized to point to the beginning of the respective audio buffer. With those provisions, the RP and WP can act as the RFC and SFC.

The use of a software rational resampler between a sender audio buffer and a receiver audio buffer allows any clock differences between the sender and the receiver to be corrected so that the AEC operates properly, and audio artifacts are not developed.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect includes an audio frame clock drift correction apparatus that includes a sender audio buffer for storing audio frames provided from a sender. The apparatus also includes a receiver audio buffer for storing audio frames to be provided to a receiver. The apparatus also includes a rational resampler coupled to the sender audio buffer and the receiver audio buffer to receive audio frames from the sender audio buffer and to provide audio frames to the receiver audio buffer, operation of the rational resampler controlled by an upsample value and a downsample value. The apparatus also includes a sender frame counter for counting audio frames received by the sender audio buffer. The apparatus also includes a receiver frame counter for counting audio frames provided from the receiver audio buffer. The apparatus also includes difference determination logic coupled to the sender frame counter and the receiver frame counter to periodically determine the difference between the sender frame counter value and the receiver frame counter value. The apparatus also includes clock drift detection logic coupled to the difference determination logic to monitor the difference determined by the difference determination logic for changes in the value of the difference. The apparatus also includes clock drift correction logic coupled to the clock drift detection logic and the rational resampler to provide a rational resampler upsample value and a rational resampler downsample value when the clock drift detection logic determines a change in the difference value. Other embodiments of this aspect include corresponding computer systems, apparatus, and computer programs recorded on one or more computer storage devices, each configured to perform the actions of the methods.

Implementations may include one or more of the following features. The audio frame clock drift correction apparatus may include: a processor; and memory coupled to the processor for storing instructions executed by the processor, the memory storing instructions executed by the processor to form the rational resampler, sender frame counter, receiver frame counter, difference determination logic, clock drift detection logic and clock drift correction logic. The memory storing instructions executed by the processor to form the rational resampler, sender frame counter, receiver frame counter, difference determination logic, clock drift detection logic and clock drift correction logic execute in user space. The clock drift correction logic provides the rational resampler upsample value and the rational resampler downsample value only when the period between providing the rational resampler upsample values and the rational resampler downsample values is small enough that the difference between the sender frame counter value and the receiver frame counter value results in an error above a predetermined threshold. The period for the periodic determination by the difference determination logic is based on an elapsed time. The period for the periodic determination by the difference determination logic is based on a number of audio frames provided to the sender audio buffer or provided from the receiver audio buffer. The clock drift detection logic monitors the difference determined by the difference determination logic for changes in the value of the difference each time the difference is determined.

One general aspect includes a method for correcting audio frame clock drift. The method includes storing audio frames provided from a sender in a sender audio buffer. The method also includes storing audio frames to be provided to a receiver in a receiver audio buffer. The method also includes rationally resampling audio frames received from the sender audio buffer to provide audio frames to the receiver audio buffer, the rational resampling controlled by an upsample value and a downsample value. The method also includes counting audio frames received by the sender audio buffer with a sender frame counter. The method also includes counting audio frames provided from the receiver audio buffer with a receiver frame counter. The method also includes periodically determining the difference between the sender frame counter value and the receiver frame counter value. The method also includes monitoring the difference determined between the sender frame counter value and the receiver frame counter value for changes in the value of the difference. The method also includes providing a rational resampler upsample value and a rational resampler downsample value when a change in the difference value is determined. Other embodiments of this aspect include corresponding computer systems, apparatus, and computer programs recorded on one or more computer storage devices, each configured to perform the actions of the methods.

Implementations may include one or more of the following features. The method where rationally resampling, counting audio frames received by the sender audio buffer, counting audio frames provided from the receiver audio buffer, periodically determining the difference, monitoring the difference and providing a rational resampler upsample value and a rational resampler downsample value are performed by a processor executing instructions. The instructions executed by the processor to rationally resample, count audio frames received by the sender audio buffer, count audio frames provided from the receiver audio buffer, periodically determine the difference, monitor the difference and provide a rational resampler upsample value and a rational resampler downsample value execute in user space. Providing a rational resampler upsample value and a rational resampler downsample value is only performed when the period between providing the rational resampler upsample values and the rational resampler downsample values is small enough that the difference between the sender frame counter value and the receiver frame counter value results in an error above a predetermined threshold. The period for periodically determining the difference is based on an elapsed time. The period for periodically determining the difference is based on a number of audio frames provided to the sender audio buffer or provided from the receiver audio buffer. Monitoring the difference determined between the sender frame counter value and the receiver frame counter value is performed each time the difference is determined. Implementations of the described techniques may include hardware, a method or process, or computer software on a computer-accessible medium.

One general aspect includes a non-transitory program storage device or devices for correcting clock drift. The non - transitory program storage device includes storing audio frames provided from a sender in a sender audio buffer. The device also includes storing audio frames to be provided to a receiver in a receiver audio buffer. The device also includes rationally resampling audio frames received from the sender audio buffer to provide audio frames to the receiver audio buffer, the rational resampling controlled by an upsample value and a downsample value. The device also includes counting audio frames received by the sender audio buffer with a sender frame counter. The device also includes counting audio frames provided from the receiver audio buffer with a receiver frame counter. The device also includes periodically determining the difference between the sender frame counter value and the receiver frame counter value. The device also includes monitoring the difference determined between the sender frame counter value and the receiver frame counter value for changes in the value of the difference. The device also includes providing a rational resampler upsample value and a rational resampler downsample value when a change in the difference value is determined. Other embodiments of this aspect include corresponding computer systems, apparatus, and computer programs recorded on one or more computer storage devices, each configured to perform the actions of the methods.

Implementations may include one or more of the following features. The non-transitory program storage device or devices where the instructions executed by the processor to rationally resample, count audio frames received by the sender audio buffer, count audio frames provided from the receiver audio buffer, periodically determine the difference, monitor the difference and provide a rational resampler upsample value and a rational resampler downsample value execute in user space. Providing a rational resampler upsample value and a rational resampler downsample value is only performed when the period between providing the rational resampler upsample values and the rational resampler downsample values is small enough that the difference between the sender frame counter value and the receiver frame counter value results in an error above a predetermined threshold. The period for periodically determining the difference is based on an elapsed time. The period for periodically determining the difference is based on a number of audio frames provided to the sender audio buffer or provided from the receiver audio buffer. Monitoring the difference determined between the sender frame counter value and the receiver frame counter value is performed each time the difference is determined.

The above description is intended to be illustrative, and not restrictive. For example, the above-described examples may be used in combination with each other. Many other examples will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein."

**Claims**

1. An audio frame clock drift correction apparatus comprising:

   a sender audio buffer for storing audio frames provided from a sender;
   a receiver audio buffer for storing audio frames to be provided to a receiver;
   a rational resampler coupled to the sender audio buffer and the receiver audio buffer to receive audio frames from the sender audio buffer and to provide audio frames to the receiver audio buffer, operation of the rational resampler controlled by an upsample value and a downsample value;
   a sender frame counter for counting audio frames received by the sender audio buffer;
   a receiver frame counter for counting audio frames provided from the receiver audio buffer;
   difference determination logic coupled to the sender frame counter and the receiver frame counter to periodically determine the difference between the sender frame counter value and the receiver frame counter value;
   clock drift detection logic coupled to the difference determination logic to monitor the difference determined by the difference determination logic for changes in the value of the difference; and
   clock drift correction logic coupled to the clock drift detection logic and the rational resampler to provide a rational resampler upsample value and a rational resampler downsample value when the clock drift detection logic determines a change in the difference value.

2. The audio frame clock drift correction apparatus of claim 1, the apparatus further comprising:

   a processor; and

memory coupled to the processor for storing instructions executed by the processor, the memory storing instructions executed by the processor to form the rational resampler, sender frame counter, receiver frame counter, difference determination logic, clock drift detection logic and clock drift correction logic.

3. The audio frame clock drift correction apparatus of claim 2, wherein the instructions executed by the processor to form the rational resampler, sender frame counter, receiver frame counter, difference determination logic, clock drift detection logic and clock drift correction logic execute in user space.

4. The audio frame clock drift correction apparatus of claim 1, wherein the clock drift correction logic provides the rational resampler upsample value and the rational resampler downsample value only when the period between providing the rational resampler upsample values and the rational resampler downsample values is small enough that the difference between the sender frame counter value and the receiver frame counter value results in an error above a predetermined threshold.

5. The audio frame clock drift correction apparatus of claim 1, wherein the period for the periodic determination by the difference determination logic is based on an elapsed time.

6. The audio frame clock drift correction apparatus of claim 1, wherein the period for the periodic determination by the difference determination logic is based on a number of audio frames provided to the sender audio buffer or provided from the receiver audio buffer.

7. The audio frame clock drift correction apparatus of claim 1, wherein the clock drift detection logic monitors the difference determined by the difference determination logic for changes in the value of the difference each time the difference is determined.

8. A method for correcting audio frame clock drift, the method comprising:

storing audio frames provided from a sender in a sender audio buffer;
storing audio frames to be provided to a receiver in a receiver audio buffer;
rationally resampling audio frames received from the sender audio buffer to provide audio frames to the receiver audio buffer, the rational resampling controlled by an upsample value and a downsample value;
counting audio frames received by the sender audio buffer with a sender frame counter;
counting audio frames provided from the receiver audio buffer with a receiver frame counter;
periodically determining the difference between the sender frame counter value and the receiver frame counter value;
monitoring the difference determined between the sender frame counter value and the receiver frame counter value for changes in the value of the difference; and
providing a rational resampler upsample value and a rational resampler downsample value when a change in the difference value is determined.

9. The method of claim 8, wherein rationally resampling, counting audio frames received by the sender audio buffer, counting audio frames provided from the receiver audio buffer, periodically determining the difference, monitoring the difference and providing a rational resampler upsample value and a rational resampler downsample value are performed by a processor executing instructions.

10. The method of claim 9, wherein the instructions executed by the processor to rationally resample, count audio frames received by the sender audio buffer, count audio frames provided from the receiver audio buffer, periodically determine the difference, monitor the difference and provide a rational resampler upsample value and a rational resampler downsample value execute in user space.

11. The method of claim 8, wherein providing a rational resampler upsample value and a rational resampler downsample value is only performed when the period between providing the rational resampler upsample values and the rational resampler downsample values is small enough that the difference between the sender frame counter value and the receiver frame counter value results in an error above a predetermined threshold.

12. The method of claim 8, wherein the period for periodically determining the difference is based on an elapsed time.

13. The method of claim 8, wherein the period for periodically determining the difference is based on a number of audio frames provided to the sender audio buffer or provided from the receiver audio buffer.

14. The method of claim 8, wherein monitoring the difference determined between the sender frame counter value and the receiver frame counter value is performed each time the difference is determined.

15. A non-transitory program storage device or devices, readable by one or more processors in a videoconference endpoint and comprising instructions stored thereon to cause the one or more processors to perform a method comprising the steps of:

storing audio frames provided from a sender in a sender audio buffer;
storing audio frames to be provided to a receiver in a receiver audio buffer;
rationally resampling audio frames received from the sender audio buffer to provide audio frames to the receiver audio buffer, the rational resampling controlled by an upsample value and a downsample value;
counting audio frames received by the sender audio buffer with a sender frame counter;
counting audio frames provided from the receiver audio buffer with a receiver frame counter;
periodically determining the difference between the sender frame counter value and the receiver frame counter value;
monitoring the difference determined between the sender frame counter value and the receiver frame counter value for changes in the value of the difference; and
providing a rational resampler upsample value and a rational resampler downsample value when a change in the difference value is determined.

**Fig. 1**

**Fig. 2**

Processing Unit
102

EP 4 174 858 A1

**Fig. 3**

# Fig. 4

RP

WP

Delay

404

402

# Fig. 5

314

239

310

RP

Receiver Frame Counter

Clock Drift Correction

Sender Frame Counter

WP

316

512

510

508

308

Rational resampler

↓M

Hz

↑L

Decimater

Low Pass Filter

Expander

312

Fig. 6A

Fig. 6B

**Fig. 8A**

Frame ready 700

Get frame from ALSA, update WP 702

Increment Sender Frame Counter (SFC) 704

Place frame in buffer 706

Done 708

**Fig. 7**

800 Ready to process next frame

802 Get frame from buffer, update RP → Process frame normally 804

Increment Receiver Frame Counter (RFC) 806

Clock drift correction 808

810 Sample time? — N

814 Read SSC, RSC

816 Determine and record difference

818 Difference change since last update above threshold? — N

820 Perform linear regression since last update to get PPM value

812 Done

822 Below PPM threshold? — Y / N

824 Determine new L, M values for resampler

Update resampler and store values and devices 826

Done 812

# Fig. 8B

Europäisches
Patentamt

European
Patent Office

Office européen
des brevets

# EUROPEAN SEARCH REPORT

**Application Number**

**EP 22 19 8031**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/149850 A1 (BOWMAN TIMOTHY D [US]) 6 July 2006 (2006-07-06) * column 78 - column 82 * * figure 5 * | 1-15 | INV. G11B27/10 H04N21/43 H04N21/436 H04N21/439 H04N21/6373 |
| X | US 2004/064576 A1 (GOLDHOR RICHARD S [US] ET AL) 1 April 2004 (2004-04-01) * paragraph [0048] - paragraph [0049] * * figure 2 * * figure 3 * * figure 4 * | 1-15 | |

**TECHNICAL FIELDS SEARCHED      (IPC)**

G11B
H04N

The present search report has been drawn up for all claims

| Place of search | Date of completion of the search | Examiner |
|---|---|---|
| Munich | 2 February 2023 | Ogor, Pascal |

EPO FORM 1503 03.82 (P04C01)

## ANNEX TO THE EUROPEAN SEARCH REPORT
## ON EUROPEAN PATENT APPLICATION NO.

**EP 22 19 8031**

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2023

| Patent document cited in search report | | Publication date | Patent family member(s) | | Publication date |
|---|---|---|---|---|---|
| US 2006149850 | A1 | 06-07-2006 | US 2006149850 A1 | | 06-07-2006 |
| | | | WO 2006074274 A2 | | 13-07-2006 |
| US 2004064576 | A1 | 01-04-2004 | AU 4691200 A | | 17-11-2000 |
| | | | US 2002052967 A1 | | 02-05-2002 |
| | | | US 2004064576 A1 | | 01-04-2004 |
| | | | WO 0067414 A2 | | 09-11-2000 |